# FASCICULE DE BREVET EUROPEEN

(11) **EP 0 903 610 B1**
(45) Date de publication et mention de la délivrance du brevet: **15.12.2004**
(21) Numéro de dépôt: 98402213.7
(22) Date de dépôt: 08.09.1998
(51) Int. Cl.: G02C 13/00

(54) **Appareil de prise de vue**
Bildaufnahmevorrichtung
Image pickup apparatus

(30) Priorité: 11.09.1997 FR 9711304
(43) Date de publication de la demande: 24.03.1999
(73) Titulaire: ESSILOR INTERNATIONAL (Compagnie Générale d'Optique), F-94220 Charenton-le-Pont (FR)
(72) Inventeur: Genevieve, Elisabeth, 94880 Noiseau (FR); Nauche, Michel, 95230 Soisy Sous Montmorency (FR); Horel, Patrick, 93330 Neuilly Sur Marne (FR)
(74) Mandataire: Santarelli

(56) Documents cités:
- WO-A-93/21819
- FR-A- 2 558 714
- FR-A- 2 605 209
- FR-A- 2 688 679
- US-A- 3 454 331

## Description

La présente invention concerne d'une manière générale les appareils de prise de vue du type de ceux mis en oeuvre par les opticiens pour effectuer le relevé de diverses mesures de position sur un sujet porteur d'une monture de lunettes en vue de l'équipement de celle-ci.

Il s'agit, en bref, d'acquérir une image de ce sujet ainsi porteur de cette monture de lunettes, en vue de situer la position de ses pupilles par rapport aux cercles ou entourage de cette dernière.

Les appareils de prise de vue mis en oeuvre à cet effet comportent, globalement, d'une part, un dispositif d'acquisition d'image, qui est par exemple équipé d'une caméra pour permettre la prise de vue à effectuer, et auquel correspond donc un axe de prise de vue, et, d'autre part, un écran de visée, qui permet au praticien un contrôle des opérations, et auquel correspond donc un axe d'observation.

S'agissant de repérer, sur une image, qu'il s'agisse d'une image photographique ou qu'il s'agisse d'une image vidéo, la position, par rapport au référentiel que constitue la monture de lunettes à équiper, de l'axe optique, ou axe de vision, de l'un et /ou de l'autre des yeux du sujet concerné, il importe de tenir compte, d'une part, du fait que le plan des pupilles de celui-ci se situe à l'arrière du plan moyen de la monture de lunettes, en étant écarté de ce plan d'une certaine distance, qui est en général de l'ordre de 12 mm, et, d'autre part, du fait que, pour une vision à l'horizontale, le plan moyen de la monture de lunettes est usuellement incliné sur la verticale d'un certain angle, communément dit angle pentoscopique, qui varie en général entre 5° et 15°, mais dont la valeur moyenne est de l'ordre de 10°.

A défaut, c'est-à-dire s'il n'est pas tenu compte de ces deux paramètres, l'erreur de parallaxe susceptible d'intervenir est de nature à conduire, au montage, à une erreur de position de plusieurs millimètres entre l'axe optique des verres et l'axe de vision du sujet, au détriment de la qualité de la vision de celui-ci.

La présente invention a d'une manière générale pour objet une disposition qui permet de surmonter de manière très simple et très efficace cette difficulté et qui conduit en outre à d'autres avantages.

De manière plus précise, elle a pour objet un appareil de prise de vue du genre comportant un dispositif d'acquisition d'image, auquel correspond un axe de prise de vue, et un écran de visée, auquel correspond un axe d'observation, cet appareil de prise de vue étant d'une manière générale caractérisé en ce qu'il comporte deux blocs articulés l'un à l'autre, de manière pendulaire, autour d'un axe de pivotement horizontal, à leur partie haute, à savoir, un bloc de prise de vue, qui comporte le dispositif d'acquisition d'image, et auquel est liée l'orientation de l'axe de prise de vue correspondant, et un bloc d'observation, qui comporte l'écran de visée, et auquel est liée l'orientation de l'axe d'observation correspondant, et en ce que le centre de gravité du bloc de prise de vue se situe à un niveau inférieur à celui de l'axe de pivotement de l'ensemble.

Grâce à cette disposition, le bloc de prise de vue pend, librement, à la verticale, notamment lorsque, pour la prise de vue à effectuer, le praticien se saisit du bloc d'observation.

Ainsi, l'orientation propre de ce bloc de prise de vue est immuable, quelle que soit celle du bloc d'observation, alors même que, pour un bon cadrage du sujet concerné, cette dernière est susceptible d'être différente suivant la taille de ce sujet et/ou celle du praticien.

Dès lors, l'axe de prise de vue peut avantageusement être systématiquement perpendiculaire au plan moyen de la monture de lunettes, ce qui élimine toute erreur de parallaxe lors de la prise de vue.

Il suffit, pour ce faire, que, par construction, cet axe de prise de vue soit incliné sur l'horizontale d'un angle égal à l'angle pentoscopique de la monture de lunettes, lorsque, comme indiqué, le bloc de prise de vue pend librement à la verticale.

Autrement dit, l'axe de pivotement intervenant dans l'appareil de prise de vue suivant l'invention permet avantageusement, par lui-même, c'est-à-dire sans l'intervention d'un quelconque autre moyen de compensation ou d'asservissement, et, donc, de manière particulièrement simple et économique, de conserver, à chaque prise de vue, un angle de prise de vue constant.

Il permet en outre, avantageusement, si désiré, par simple retournement du bloc d'observation, une présentation, au sujet concerné, de l'image précédemment observée, alors dûment enregistrée à cet effet, ou un travail au côté de ce sujet.

Pour ce faire, l'amplitude du débattement angulaire entre le bloc de prise de vue et le bloc d'observation est faite suffisante pour permettre au bloc d'observation d'occuper une position retournée pour laquelle l'écran de visée qu'il comporte est visible de l'avant, et, conjointement, l'image est elle-même retournée de façon à ce qu'elle soit alors visible dans le bon sens.

Préférentiellement, également, le bloc d'observation comporte lui-même une assise permettant, au repos, à l'ensemble, de reposer sur un plan horizontal par l'intermédiaire de ce bloc d'observation.

Mais, suivant un développement de l'invention, il est par construction fait en sorte que, lorsque l'ensemble repose ainsi sur un plan horizontal par l'intermédiaire du bloc d'observation, l'axe de prise de vue, c'est-à-dire l'axe de visée du bloc de prise de vue, fasse encore avec l'horizontale un angle sensiblement égal à l'angle pentoscopique d'une monture de lunettes, préférentiellement augmenté d'un angle de l'ordre de 15° pour tenir compte de l'inclinaison que fait alors usuellement la tête par rapport à la verticale.

La position de repos de l'appareil de prise de vue suivant l'invention peut ainsi avantageusement être également une position de prise de vue en vision de près.

Préférentiellement, enfin, le bloc de prise de vue de l'appareil de prise de vue suivant l'invention comporte, en façade, une lame semi-transparente, située perpendiculairement à l'axe de prise de vue, et à l'abri de laquelle est dissimulé le dispositif d'acquisition d'image correspondant.

Ainsi, lors d'une prise de vue, le sujet concerné, qui, par ailleurs, est avantageusement libre de toute contrainte, ne se trouve avantageusement pas distrait ou perturbé par le dispositif d'acquisition d'image, au bénéfice de la qualité de l'image obtenue.

Les caractéristiques et avantages de l'invention ressortiront d'ailleurs de la description qui va suivre, à titre d'exemple, en référence aux dessins schématiques annexés sur lesquels :
la figure 1 est une vue en perspective d'un appareil de prise de vue suivant l'invention, vu de l'avant;
la figure 2 en est une autre vue en perspective, vu de l'arrière ;
la figure 3 en est, à échelle supérieure, une vue en coupe transversale, suivant la ligne III-III de la figure 1 ;
la figure 4 est, à échelle inférieure, une vue de côté illustrant la mise en oeuvre de l'appareil de prise de vue suivant l'invention, pour un premier mode de cadrage du sujet concerné ;
la figure 5 est une vue de côté analogue à celle de la figure 4, pour un deuxième mode de cadrage de ce sujet ;
la figure 6 est une vue de côté analogue à celle des figures 4 et 5, pour la position de repos de l'appareil de prise de vue suivant l'invention ;
la figure 7 est une vue de côté analogue à celle des figures 4, 5 et 6, pour une position de retournement de cet appareil de prise de vue ;
la figure 8 est, à échelle supérieure, et avec un arrachement local, une vue partielle de côté de l'appareil de prise de vue suivant l'invention, pour une variante de réalisation de celui-ci;
La figure 9 et 10 sont des vues partielles qui, correspondant chacune respectivement, à celles des figures 6 et 7, se rapportent à un développement de l'invention.

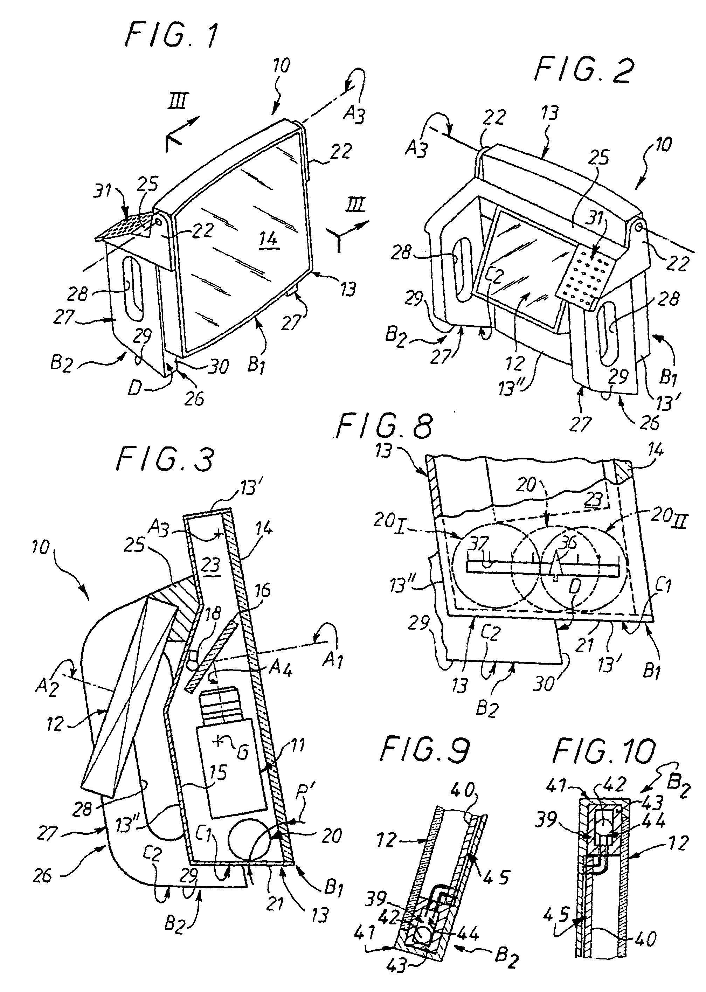

Tel qu'illustré sur ces figures, et de manière connue en soi, l'appareil de prise de vue 10 suivant l'invention comporte un dispositif d'acquisition d'image 11, auquel correspond un axe de prise de vue A1, et un écran de visée 12, auquel correspond un axe d'observation A2, figure 3.

Suivant l'invention, cet appareil de prise de vue 10 comporte, globalement, deux blocs B1, B2 articulés l'un à l'autre, de manière pendulaire, autour d'un axe de pivotement A3 horizontal, à leur partie haute, à savoir, un bloc de prise de vue B1, qui comporte le dispositif d'acquisition d'image 11, et auquel est liée l'orientation de l'axe de prise de vue A1 correspondant, et un bloc d'observation 82, qui comporte l'écran de visée 12, et auquel est liée l'orientation de l'axe d'observation A2 correspondant, et, par construction, il est fait en sorte que le centre de gravité G du bloc de prise de vue B1 se situe à un niveau inférieur à celui de l'axe de pivotement A3 de l'ensemble.

Dans la forme de réalisation représentée, le bloc de prise de vue B1 comporte un boîtier 13 à l'abri duquel sont disposés, d'une part, le dispositif d'acquisition d'image 11, et, d'autre part, suivant des dispositions décrites plus en détail ultérieurement, divers composants associés à ce dispositif d'acquisition d'image 11.

Préférentiellement, et cela est le cas dans la forme de réalisation représentée, le bloc de prise de vue B1 comporte, en façade, pour la fermeture de son boîtier 13, une lame semi-transparente 14, qui s'étend perpendiculairement à l'àxe de prise de vue A1, et à l'abri de laquelle est dissimulé le dispositif d'acquisition d'image 11.

Ce dispositif d'acquisition d'image 11 est par exemple une caméra vidéo.

Une telle caméra vidéo étant bien connue par elle-même, et ne relevant pas, en propre, de l'invention, elle ne sera pas décrite ici.

Dans la forme de réalisation représentée, l'axe optique A4 du dispositif d'acquisition d'image 11 s'étend, parallèlement à la lame semi-transparente 14, dans un plan vertical, et il est donc prévu, dans le boîtier 13, entre ce dispositif d'acquisition d'image 11 et la lame semi-transparente 14, et, plus précisément, entre le fond 15 du boîtier 13 et cette lame semi-transparente 14, pour le repliement à 90° de cet axe optique A4 suivant l'axe de prise de vue A1, un miroir de renvoi 16 incliné à 45°.

Parmi les autres composants associés au dispositif d'acquisition d'image 11 figure, également, dans la forme de réalisation représentée, une source de lumière 18, que le bloc de prise de vue B1 présente intérieurement, et qui, destinée à former un point de fixation pour le sujet à viser, est disposée à l'arrière du miroir de renvoi 16, entre celui-ci et le fond 15 du boîtier 13, dans l'alignement de l'axe de prise de vue A1.

Pour que cette source de lumière 18 soit effectivement visible du sujet, le miroir de renvoi 16 peut être formé par une simple lame semi-transparente.

Il peut également comporter localement un perçage.

Parmi les autres composants associés au dispositif d'acquisition d'image 11, figure, enfin, dans la forme de réalisation représentée, pour la desserte de ce dispositif d'acquisition d'image 11 aussi bien que pour celle de la source de lumière 18, un dispositif d'alimentation 20.

Il s'agit par exemple, d'une batterie d'accumulateurs.

Eu égard à son poids, et à l'incidence qu'il a donc sur la position du centre de gravité G, ce dispositif d'alimentation 20 est placé à la partie basse du boîtier 13, en étant préférentiellement disposé en dessous du dispositif d'acquisition d'image 11, entre celui-ci et le bord inférieur 21 du boîtier 13.

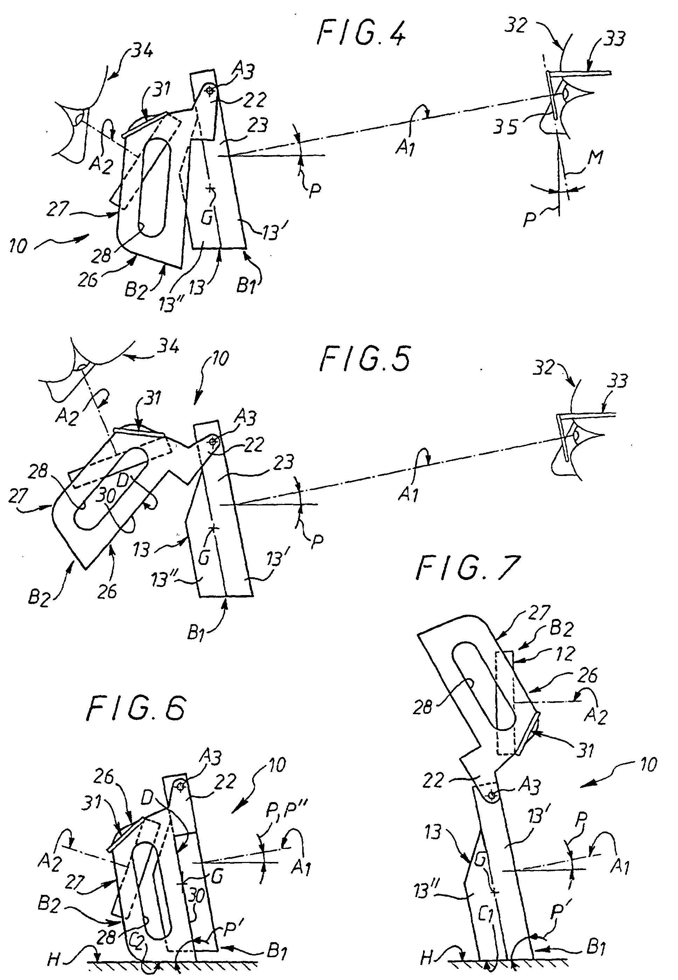

Préférentiellement également, et cela est le cas dans la forme de réalisation représentée, le bloc de prise de vue B1 présente, par lui-même, une assise C1 permettant à l'ensemble, c'est-à-dire à l'ensemble de l'appareil de prise de vue 10, de reposer sur un plan horizontal H par l'intermédiaire de ce bloc de pris de vue B1, tel que représenté sur la figure 7.

Par construction, il est fait en sorte que l'axe de prise de vue A1, c'est-à-dire l'axe de visée du bloc de prise de vue B1, fasse un angle aigu P avec l'horizontale lorsque l'ensemble repose sur un plan horizontal H par l'intermédiaire de ce bloc de prise de vue B1.

Suivant l'invention, cet angle aigu P est choisi pour correspondre sensiblement à l'angle pentoscopique des montures de lunettes les plus usuelles.

Il est donc de l'ordre de 10°.

Dans la forme de réalisation représentée, l'assise C1 du bloc de prise vue B1 est directement formée par le bord inférieur 21 de son boîtier 13.

Celui-ci est donc plan, et il forme, avec la lame semi-transparente 14, un angle aigu P' qui est le complément à 90° de l'angle aigu P précédent.

Dans la forme de réalisation représentée, le boîtier 13 du bloc de prise de vue B1 comporte une partie avant 13', qui porte la lame semi-transparente 14, et, en retrait par rapport à cette partie avant 13', une partie arrière 13", de moindre largeur, mais de plus grande profondeur, à la faveur de laquelle sont logés le dispositif d'acquisition d'image et certains au moins des composants associés à celui-ci.

Suivant l'invention, le bloc de prise de vue B1 est monté librement pivotant sur le bloc d'observation B2, suivant l'axe de pivotement A3 de l'ensemble.

Par exemple, et tel que représenté, le bloc d'observation B2 présente, latéralement, à cet effet, deux flasques 22, par lesquels il est engagé, à la manière d'une chape, sur le boîtier 13 du bloc de prise de vue B1, en étant en prise à tourillonnement avec les bords latéraux 23 de celui-ci.

Le montage pivotant correspondant relevant de l'homme de métier, il ne sera pas décrit en détail ici, et il n'a pas été représenté sur les figures.

Si désiré, ce montage pivotant peut mettre en oeuvre des tourillons creux, et ces derniers peuvent être mis à profit pour le passage de la filerie, non représentée, normalement prévue entre le dispositif d'acquisition d'image 11 du bloc de prises de vue B1 et l'écran de visée 12 du bloc d'observation B2.

Dans la forme de réalisation représentée, le bloc d'observation B2 comporte, à l'arrière du bloc de prise de vue B1, une traverse 25, qui s'étend de l'un à l'autre de ses deux flasques 22, et qui, dans sa zone médiane, porte, en biais, l'écran de visée 12.

Cette traverse 25 peut s'étendre à pleine épaisseur sur tout ou partie de la hauteur du bloc d'observation B2, ou être prolongée, vers le haut et/ou vers le bas, sur une partie au moins de la hauteur de celui-ci, par un quelconque flasque de moindre épaisseur.

Préférentiellement, et cela est le cas dans la forme de réalisation représentée, l'appareil de prise de vue 10 suivant l'invention est portatif.

Par exemple, et tel que représenté, son bloc d'observation B2 est, pour ce faire, équipé de moyens de préhension 26, qui, destinés à faciliter la manipulation de l'ensemble, sont à la disposition du praticien.

Dans la forme de réalisation représentée, ces moyens de préhension 26 comportent deux poignées 27, qui s'étendent chacune respectivement le long des deux bords latéraux du bloc d'observation B2, à l'arrière du bloc de prise de vue B1, au voisinage immédiat des flasques 22 du bloc d'observation B2, et qui sont chacune ajourées d'une ouverture 28.

Par exemple, et tel que représenté, ces poignées 27 sont sensiblement parallèles l'une à l'autre, et elles s'étendent sensiblement perpendiculairement à la lame semi-transparente 14 du bloc de prise de vue B1, en encadrant la partie arrière 13" du boîtier 13 de celui-ci.

Préférentiellement, et cela est le cas, dans la forme de réalisation représentée, le bloc d'observation B2 comporte une assise C2 permettant à l'ensemble de reposer sur un quelconque plan horizontal H par l'intermédiaire de ce bloc d'observation B2, tel que représenté sur la figure 6.

Par construction, et sous les réserves de ce qui suit, il est par exemple fait en sorte que l'axe de prise de vue A1 du bloc de prise de vue B1 fasse un angle aigu P avec l'horizontale lorsque l'ensemble repose ainsi sur un plan horizontal H par l'intermédiaire du bloc d'observation B2.

Cet angle aigu P est alors le même que le précédent.

Il est donc en pratique de l'ordre de 10°.

Dans la forme de réalisation représentée, l'assise C2 du bloc d'observation B2 est formée par la surface inférieure 29 des deux poignées 27 que comporte ce bloc d'observation B2.

Cette surface inférieure 29 est donc sensiblement plane.

Suivant l'invention, elle fait un angle aigu P' avec une surface d'appui D que le bloc d'observation 82 présente par ailleurs pour le bloc de prise de vue B1.

Par exemple, et tel que représenté, cette surface d'appui D est directement formée par la surface avant 30 des poignées 27.

Dans la forme de réalisation représentée, enfin, le bloc d'observation B2 est équipé d'une platine de commande 31, qui est à la disposition du praticien, pour le pilotage de l'ensemble.

Cette platine de commande 31 est par exemple adossée à l'une des poignées 27, pour être accessible à partir de celle-ci.

Dans la forme de réalisation représentée, elle est disposée à la partie haute de cette poignée 27, et elle s'étend en biais.

Pour la mise en oeuvre de l'appareil de prise de vue 10 suivant l'invention, c'est-à-dire pour l'acquisition, par cet appareil de prise de vue 10, de l'image d'un sujet 32 porteur d'une monture de lunettes 33 à équiper, tel que schématisé sur les figures 4 et 5, il suffit, pour le praticien 34, lorsque l'observation correspondante doit se faire en vision de loin, de saisir, à pleines mains, cet appareil de prise de vue 10, par les poignées 27 de son bloc d'observation 82, et de le diriger sur le sujet 32.

Pour un cadrage convenable du sujet 32, suivant que celui-ci est relativement grand, figure 4, ou suivant qu'il est relativement petit, figure 5, le praticien 34 tient l'appareil de prise de vue 10 suivant l'invention à une hauteur appropriée par rapport à lui.

Mais, dans tous les cas, et grâce à la disposition suivant l'invention, le bloc de prise de vue B1 présente, par lui-même, par simple gravité, une orientation immuable, pour laquelle son centre de gravité G se situe à la verticale de l'axe de pivotement A3 de l'ensemble, et pour laquelle, par conséquent, eu égard aux dispositions constructives précisées précédemment, son axe de prise de vue A1 fait systématiquement un angle aigu P avec l'horizontale.

Cet angle aigu P étant sensiblement égal à l'angle pentoscopique de la monture de lunettes 33, c'est-à-dire à l'angle que fait avec la verticale le plan moyen M des cercles ou entourage 35 de cette monture de lunettes 33, tel que repéré sur la figure 4, l'axe de prise de vue A1 est ainsi avantageusement toujours sensiblement perpendiculaire à ce plan moyen M, ce qui, comme recherché, permet d'éviter toute erreur de parallaxe.

Lorsque, au repos, figure 6, l'appareil de prise de vue 10 suivant l'invention est posé sur un plan horizontal H à la faveur de l'assise C2 prévue à cet effet sur son bloc d'observation B2, l'axe de prise de vue A1 du bloc de prise de vue B1 fait encore un angle aigu P avec l'horizontale, soit que, comme précédemment, ce bloc de prise de vue B1 pende encore librement par rapport au bloc d'observation B2, soit que, au contraire, et comme prévu suivant l'invention, il soit alors en butée contre la surface d'appui D prévue à cet effet sur ce bloc d'observation B2, en portant contre celle-ci par les bords latéraux de la partie avant 13'de son boîtier 13.

Cependant, pour cette position de repos, et comme déjà indiqué précédemment, il est préférentiellement ajouté à l'angle aigu P un angle de l'ordre de 15°, pour tenir compte de l'inclinaison que fait alors usuellement la tête par rapport à la verticale, l'axe de prise de vue A1 du bloc de prise de vue B1 faisant alors globalement un angle aigu P" avec l'horizontale.

La position de repos de l'appareil de prise de vue 10 suivant l'invention peut donc ainsi également constituer une position de prise de vue, notamment pour une acquisition d'image en vision de près.

Mais, comme aussi déjà indiqué précédemment, et tel que représenté sur la figure 7, l'appareil de prise de vue 10 suivant l'invention peut également reposer sur le plan horizontal H par l'intermédiaire du bloc de prise de vue B1, à la faveur de l'assise C1 prévue à cet effet sur celui-ci.

Suivant l'invention, l'amplitude du débattement angulaire entre le bloc de prise de vue B1 et le bloc d'observation 82 est, par construction, suffisante pour permettre au bloc d'observation B2 d'occuper alors une position retournée pour laquelle, tel que représenté sur la figure 7, l'écran de visée 12 qu'il comporte est visible de l'avant.

Autrement dit, dans ce cas, l'axe d'observation A2 est lui aussi dirigé vers l'avant.

Conjointement, l'image présentée est elle-même retournée.

Il est ainsi possible au sujet concerné, c'est-à-dire au porteur de lunettes, d'observer, sur l'écran de visée 12, une image de lui, qui, prise par le bloc de prise de vue B1, est une image précédemment acquise et dûment enregistrée, ou est une image instantanée, et qui, dûment retournée, est dans le bon sens.

Autrement dit, cette image s'étend correctement dans le sens haut-bas, avec reproduction d'un effet miroir.

Préférentiellement, et cela est le cas dans la forme de réalisation représentée, lorsqu'il repose sur un plan horizontal H par l'intermédiaire de son bloc de prise de vue B1 et que le bloc d'observation 82 est en position retournée, l'écran de visée 12 de ce bloc d'observation B2 s'étend sensiblement verticalement.

Bien entendu, un bouton de blocage, non représenté, peut être prévu pour assurer, de manière contrôlée, une immobilisation satisfaisante du bloc d'observation B2 lorsqu'il est en position retournée.

Dans ce qui précède, il a été supposé que le centre de gravité G du bloc de prise de vue B1, dont la position dépend de la répartition des masses au sein de celui-ci, était fixe.

Préférentiellement, et suivant un développement de l'invention, ce centre de gravité G est au contraire réglable en position, de manière à permettre de pouvoir ajuster au mieux l'angle aigu P que fait avec l'horizontale l'axe de prise de vue A1 du bloc de prise de vue B1.

Par exemple, et suivant des dispositions qui, relevant de l'homme de métier, ne seront pas décrites ici, le dispositif d'alimentation 20 associé au dispositif d'acquisition d'image 11 est lui-même monté réglable en position, de l'avant vers l'arrière, dans le boîtier 13 du bloc de prise de vue B1, entre le fond 15 de ce boîtier 13 et la lame semi-transparente 14, et transversalement par apport à l'axe de pivotement A3, tel que schématisé en traits interrompus 20_{I} , 20_{II} sur la figure 8.

Un index 36, qui, lié à ce dispositif d'alimentation 20, fait saillie hors du boîtier 13 à la faveur d'une fente 37 du bord latéral 23 correspondant de celui-ci, permet, de l'extérieur, de contrôler la position du dispositif d'alimentation 20, et, donc, la valeur de l'angle aigu P.

Corollairement, la partie arrière 13" du boîtier 13 s'étend alors sur toute la largeur de sa partie avant 13', pour la continuité du trajet de l'index 36.

Les figures 9 et 10 illustrent un autre développement de l'invention applicable, notamment, lorsque, comme décrit en référence aux figures 6 et 7, le bloc d'observation B2 est susceptible de passer de la position droite représentée sur les figures 6 et 9 à la position retournée représentée sur les figures 7 et 10.

Suivant ce développement, l'appareil de prise de vue 10 suivant l'invention comporte un moyen de détection 39, qui est sensible à la position du bloc d'observation B2, et qui pilote des moyens d'inversion 40 propres à assurer une inversion de l'image présentée sur l'écran de visée 12 lorsque ce bloc d'observation B2 est en position retournée.

Ainsi, l'inversion de cette image, c'est-à-dire le retournement qu'il est nécessaire de lui appliquer pour qu'elle soit dans le bon sens, est avantageusement déclenché automatiquement.

Le moyen de détection 39 mis en oeuvre à cet effet peut très simplement être un capteur de position du commerce.

Dans la forme de réalisation représentée, il intervient dans un caisson 41 portant en façade l'écran de visée 12, à l'arrière de cet écran de visée 12, et il comporte une masse conductrice 42, par exemple, une bille, tel que représenté, ou un volume de mercure, qui, disposée librement dans une chambre 43, forme le contact mobile d'un interrupteur 44.

Pour la position droite du bloc d'observation 82, cet interrupteur 44 est ouvert, figure 9, et il est fermé pour sa position retournée, figure 10, la valeur de décrochage de la masse conductrice 42 étant alors dépassée.

Conjointement, les moyens d'inversion 40 mettent en oeuvre un circuit électrique, non représenté, qui appartient par exemple à une carte électronique 45, tel que représenté, et sur une partie au moins duquel l'interrupteur 44 est interposé.

Préférentiellement, la carte électronique 45 contrôlant l'écran de visée 12 gère deux couches d'affichage superposées l'une à l'autre, l'une à forte capacité en couleur, pour l'affichage de l'image du sujet concerné, l'autre à faible capacité en couleur, pour l'affichage, en surimpression, d'au moins une quelconque autre image, et, par exemple d'une image informative comportant par exemple un texte, et/ou des traits, et/ou des chiffres.

Bien entendu, ces deux images sont alors mémorisées indépendamment l'une de l'autre.

Conjointement, et suivant des dispositions qui, relevant de l'homme de l'art, ne seront pas décrites ici, les moyens d'inversion 40 sont alors aptes à assurer une inversion de l'image du sujet par rapport à un axe de symétrie horizontal, et celle de l'autre image, c'est-à-dire de l'image informative, par rapport à un axe de symétrie horizontal et par rapport à un axe de symétrie vertical.

Ainsi l'effet visuel du retournement est dûment compensé.

En particulier, le sujet se voit alors comme dans un miroir lorsque l'écran de visée 12 est positionné selon la figure 7, et, lorsque cet écran de visée 12 est positionné selon la figure 6, l'opérateur voit le sujet comme s'il était en face de lui.

Bien entendu, la présente invention ne se limite pas aux formes de réalisation décrites et représentées, mais englobe toute variante d'exécution et/ou de mise en oeuvre limitée par les revendications.

En particulier, l'appareil de prise de vue suivant l'invention peut aussi être destiné à présenter différentes montures sur le visage du sujet, que ces montures soient "physiques" ou qu'elles soient "numériques".

Il est possible, en effet, d'afficher aussi l'image enregistrée de ce visage, sur laquelle on superpose une image "numérique" d'une monture.

## Revendications

1. Appareil de prise de vue du genre comportant un dispositif d'acquisition d'image (11), auquel correspond un axe de prise de vue (A1), et un écran de visée (12), auquel correspond un axe d'observation (A2), **caractérisé en ce qu'**il comporte deux blocs (B1, B2) articulés l'un à l'autre, de manière pendulaire, autour d'un axe de pivotement (A3) horizontal, à leur partie haute, à savoir, un bloc de prise de vue (B1), qui comporte le dispositif d'acquisition d'image (11), et auquel est liée l'orientation de l'axe de prise de vue (A1) correspondant, et un bloc d'observation (B2), qui comporte l'écran de visée (12), et auquel est liée l'orientation de l'axe d'observation (A2) correspondant, et **en ce que** le centre de gravité (G) du bloc de prise de vue (B1) se situe à un niveau inférieur à celui de l'axe de pivotement (A3) de l'ensemble.

2. Appareil de prise de vue suivant la revendication 1, **caractérisé en ce que** le bloc de prise de vue (B1) est monté librement pivotant sur le bloc d'observation (B2).

3. Appareil de prise de vue suivant l'une quelconque des revendications 1, 2, **caractérisé en ce que** le centre de gravité (G) du bloc de prise de vue (B1) est réglable en position.

4. Appareil de prise de vue suivant la revendication 3, **caractérisé en ce que**, un dispositif d'alimentation (20) étant associé au dispositif d'acquisition d'image (11), ce dispositif d'alimentation (20) est monté réglable en position dans le boîtier (13) du bloc de prise de vue (B1), transversalement par rapport à l'axe de pivotement (A3).

5. Appareil de prise de vue suivant la revendication 4, **caractérisé en ce que** le dispositif d'alimentation (20) associé au dispositif d'acquisition d'image (11) est disposé en dessous de ce dernier.

6. Appareil de prise de vue suivant l'une quelconque des revendications 1 à 5, **caractérisé en ce que** le bloc de prise de vue (B1) comporte, en façade, une lame semi-transparente (14), qui s'étend perpendiculairement à l'axe de prise de vue (A1), et à l'abri de laquelle est dissimulé le dispositif d'acquisition d'image (11 ).

7. Appareil de prise de vue suivant la revendication 6, **caractérisé en ce que** l'axe optique (A4) du dispositif d'acquisition d'image (11) s'étend parallèlement à la lame semi-transparente (14), et un miroir de renvoi (16) est prévu à 45° entre ce dispositif d'acquisition d'image (11) et cette lame semi-transparente (14).

8. Appareil de prise de vue suivant l'une quelconque des revendications 6, 7 **caractérisé en ce que** le bloc de prise de vue (B1) présente, intérieurement, une source de lumière (18).

9. Appareil de prise de vue suivant l'une quelconque des revendications 1 à 8, **caractérisé en ce que** le bloc d'observation (B2) est équipé de moyens de préhension (26) à la disposition du praticien.

10. Appareil de prise de vue suivant la revendication 9, **caractérisé en ce que** les moyens de préhension (26) du bloc d'observation (B2) comportent deux poignées (27), qui s'étendent chacune respectivement le long des deux bords latéraux de ce bloc d'observation (B2).

11. Appareil de prise de vue suivant l'une quelconque des revendications 1 à 10, **caractérisé en ce que** le bloc d'observation (B2) comporte une assise (C2) permettant à l'ensemble de reposer sur un plan horizontal (H) par l'intermédiaire de ce bloc d'observation (B2).

12. Appareil de prise de vue suivant la revendication 11, **caractérisé en ce que** l'axe de prise de vue (A1) du bloc de prise de vue (B1) fait un angle aigu (P, P") avec l'horizontale lorsque l'ensemble repose sur un plan horizontal (H) par l'intermédiaire du bloc d'observation (B2).

13. Appareil de prise de vue suivant les revendications 9 et 11, prises conjointement, **caractérisé en ce que** l'assise (C2) du bloc d'observation (B2) est formée par la surface inférieure (29) des deux poignées (27) que comporte ce bloc d'observation (B2).

14. Appareil de prise de vue suivant la revendication 13, **caractérisé en ce que** la surface inférieure (29) des poignées (27) du bloc d'observation (B2) est sensiblement plane et elle fait un angle aigu (P') avec une surface d'appui (D) que ce bloc d'observation (B2) présente par ailleurs pour le bloc de prise de vue (B1).

15. Appareil de prise de vue suivant l'une quelconque des revendications 1 à 14, **caractérisé en ce que** le bloc de prise de vue (B1) présente une assise (C1) permettant à l'ensemble de reposer sur un plan horizontal (H) par l'intermédiaire de ce bloc de prise de vue (B1).

16. Appareil de prise de vue suivant la revendication 15, **caractérisé en ce que** l'axe de prise de vue (A1) du bloc de prise de vue (B1) fait un angle aigu (P) avec l'horizontale lorsque l'ensemble repose sur un plan horizontal (H) par l'intermédiaire de ce bloc de prise de vue (B1)

17. Appareil de prise de vue suivant l'une quelconque des revendications 1 à 16, **caractérisé en ce que** l'amplitude du débattement angulaire entre le bloc de prise de vue (B1) et le bloc d'observation (82) est suffisante pour permettre au bloc d'observation (82) d'occuper une position retournée pour laquelle l'écran de visée (12) qu'il comporte est visible de l'avant.

18. Appareil de prise de vue suivant les revendications 16 et 17, prises conjointement, **caractérisé en ce que**, lorsque l'ensemble repose sur un plan horizontal (H) par l'intermédiaire du bloc de prise de vue (B1) et que le bloc d'observation (B2) est en position retournée, l'écran de visée (12) de ce bloc d'observation (B2) s'étend sensiblement verticalement.

19. Appareil de prise de vue suivant l'une quelconque des revendications 17, 18, **caractérisé en ce qu'**il comporte un moyen de détection (39), qui est sensible à la position du bloc d'observation (B2), et qui pilote des moyens d'inversion (40) propres à assurer une inversion de l'image présentée sur l'écran de visée (12) lorsque ce bloc d'observation (B2) est en position retournée.

20. Appareil de prise de vue suivant la revendication 19, **caractérisé en ce que**, l'écran de visée (12) comportant deux couches d'affichages superposées, l'une pour l'affichage de l'image du sujet concerné, l'autre pour l'affichage d'au moins une quelconque autre image, les moyens d'inversion (40) sont aptes à assurer une inversion de l'image du sujet par rapport à un axe de symétrie horizontal, et celle de l'autre image par rapport à un axe de symétrie horizontal et par rapport à un axe de symétrie vertical.

21. Appareil de prise de vue suivant l'une quelconque des revendications 1 à 20, **caractérisé en ce qu'**il est portatif.

## Claims

1. An imaging device including an image acquisition device (11) to which there corresponds an imaging axis (A1), and a viewing screen (12) to which there corresponds an observation axis (A2), **characterized in that** it includes two units (B1, B2) hinged together in the manner of a pendulum about a horizontal pivot axis (A3) at the top, namely an imaging unit (B1) that includes the image acquisition device (11) and to which the orientation of the corresponding imaging axis (A1) is tied and an observation unit (B2) which includes the viewing screen (12) and to which the orientation of the corresponding observation axis (A2) is tied, and **in that** the center of gravity (G) of the imaging unit (B1) is below the pivot axis (A3).

2. An imaging device according to claim 1 **characterized in that** the imaging unit (B1) is mounted on the observation unit (B2) to pivot freely.

3. An imaging device according to either claim 1 or claim 2 **characterized in that** the center of gravity (G) of the imaging unit (B1) is adjustable in position.

4. An imaging device according to claim 3 **characterized in that**, a power supply device (20) being associated with the image acquisition device (11), said power supply device (20) is mounted in the casing (13) of the imaging unit (B1) so that its position is adjustable transversely to the pivot axis (A3).

5. An imaging device according to claim 4 **characterized in that** the power supply device (20) associated with the image acquisition device (11) is below the latter.

6. An imaging device according to any of claims 1 to 5 **characterized in that** the imaging unit (B1) has a semi-transparent plate (14) on the front perpendicular to the imaging axis (A1) and concealing the image acquisition device (11).

7. An imaging device according to claim 6 **characterized in that** the optical axis (A4) of the image acquisition device (11) is parallel to the semi-transparent plate (14) and a mirror (16) is provided at 45° between said image acquisition device (11) and said semi-transparent plate (14).

8. An imaging device according to either claim 6 or claim 7 **characterized in that** the imaging unit (B1) has a light source (18) inside it.

9. An imaging device according to any of claims 1 to 8 **characterized in that** the observation unit (B2) has holding means (26) accessible to a practitioner.

10. An imaging device according to claim 9 **characterized in that** the holding means (26) of the observation unit (B2) comprise two handles (27) along respective lateral edges of said observation unit (B2).

11. An imaging device according to any of claims 1 to 10 **characterized in that** the observation unit (B2) includes a base (C2) enabling the device to be put down with said observation unit (B2) resting on a horizontal plane (H).

12. An imaging device according to claim 11 **characterized in that** the imaging axis (A1) of the imaging unit (B1) is at an acute angle (P, P") to the horizontal when the device is put down with the observation unit (B2) resting on a horizontal plane (H).

13. An imaging device according to claim 9 in conjunction with claim 11 **characterized in that** the base (C2) of the observation unit (B2) is formed by the bottom surface (29) of the two handles (27) of said observation unit (B2).

14. An imaging device according to claim 13 **characterized in that** the bottom surface (29) of the handles (27) of the observation unit (B2) is substantially plane and is at an acute angle (P') to a bearing surface (D) for said imaging unit (B1) on the observation unit (B2).

15. An imaging device according to any of claims 1 to 14 **characterized in that** the imaging unit (B1) has a base (C1) enabling the device to be put down with said imaging unit (B1) resting on a horizontal plane (H).

16. An imaging device according to claim 15 **characterized in that** the imaging axis (A1) of the imaging unit (B1) is at an acute angle (P) to the horizontal when the device is put down with said imaging unit (B1) resting on a horizontal plane (H).

17. An imaging device according to any of claims 1 to 16 **characterized in that** the amplitude of relative angular movement between the imaging unit (B1) and the observation unit (B2) is sufficient to enable the observation unit (B2) to occupy an inverted position in which its viewing screen (12) is visible from the front.

18. An imaging device according to claim 16 in conjunction with claim 17 **characterized in that** when the device is put down with the imaging unit (B1) resting on a horizontal plane (H) and the observation unit (B2) in the inverted position the viewing screen (12) of said observation unit (B2) is substantially vertical.

19. An imaging device according to either claim 17 or claim 18 **characterized in that** it includes detector means (39) responsive to the position of the observation unit (B2) and controlling inverter means (40) adapted to invert the image displayed on the viewing screen (12) when said observation unit (B2) is in the inverted position.

20. An imaging device according to claim 19 **characterized in that** the viewing screen (12) includes two superposed display layers, one for displaying an image of the person concerned and the other for displaying at least one other image of any kind, and the inverter means (40) are adapted to invert the image of the person relative to a horizontal axis of symmetry and the other image relative to a horizontal axis of symmetry and relative to a vertical axis of symmetry.

21. An image taking device according to any of claims 1 to 20 **characterized in that** it is a portable device.

## Patentansprüche

1. Bildaufnahmevorrichtung von der Art, umfassend eine Bilderfassungseinrichtung (11), mit der eine Bildaufnahmeachse (A1) korrespondiert, und einen Sucherbildschirm (12), mit dem eine Beobachtungsachse (A2) korrespondiert, **dadurch gekennzeichnet, dass** sie zwei Blöcke (B1, B2) umfasst, die um eine horizontale Drehachse (A3) in ihrem oberen Bereich in pendelartiger Weise aneinander angelenkt sind, nämlich einen Bildaufnahmeblock (B1), der die Bilderfassungseinrichtung (11) umfasst und dem die entsprechende Ausrichtung der Bildaufnahmeachse (A1) zugeordnet ist, und einen Beobachtungsblock (B2), der den Sucherbildschirm (12) umfasst und dem die entsprechende Ausrichtung der Beobachtungsachse (A2) zugeordnet ist, und dass der Schwerpunkt (G) des Bildaufnahmeblocks (B1) sich auf einem niedrigeren Niveau als die Schwenkachse (A3) der Anordnung befindet.

2. Bildaufnahmevorrichtung nach Anspruch 1, **dadurch gekennzeichnet, dass** der Bildaufnahmeblock (B1) frei schwenkbar auf dem Beobachtungsblock (B2) montiert ist.

3. Bildaufnahmevorrichtung nach einem der Ansprüche 1, 2, **dadurch gekennzeichnet, dass** der Schwerpunkt (G) des Bildaufnahmeblocks (B1) in seiner Position einstellbar ist.

4. Bildaufnahmevorrichtung nach Anspruch 3, **dadurch gekennzeichnet, dass** eine Versorgungseinrichtung (20) der Bilderfassungseinrichtung (11) zugeordnet ist, wobei diese Versorgungseinrichtung (20) quer zur Schwenkachse (A3) bezüglich ihrer Position im Gehäuse (13) des Bildaufnahmeblocks (B1) einstellbar montiert ist.

5. Bildaufnahmevorrichtung nach Anspruch 4, **dadurch gekennzeichnet, dass** die mit der Bilderfassungseinrichtung (11) zugeordnetee Versorgungseinrichtung (20) unter dieser angeordnet ist.

6. Bildaufnahmevorrichtung nach einem der Ansprüche 1 bis 5, **dadurch gekennzeichnet, dass** der Bildaufnahmeblock (B1) vorderseitig eine halbtransparente Platte (14) umfasst, die sich senkrecht zur Bildaufnahmeachse (A1) erstreckt, und in deren Schutz die Bilderfassungseinrichtung (11) verborgen ist.

7. Bildaufnahmevorrichtung nach Anspruch 6, **dadurch gekennzeichnet, dass** die optische Achse (A4) der Bildaerfassungseinrichtung (11) sich parallel zur halbtransparenten Platte (14) erstreckt, und ein Umlenkspiegel (16) unter 45° zwischen der Bilderfassungseinrichtung (11) und dieser halbtransparenten Platte (14) vorgesehen ist.

8. Bildaufnahmevorrichtung nach einem der Ansprüche 6,7, **dadurch gekennzeichnet, dass** der Bildaufnahmeblock (B1) im Inneren eine Lichtquelle (18) aufweist.

9. Bildaufnahmevorrichtung nach einem der Ansprüche 1 bis 8, **dadurch gekennzeichnet, dass** der Beobachtungsblock (B2) mit Vorspann- oder Creifmitteln (26) ausgestattet ist, die dem Praktiker zur Verfügung stehend.

10. Bildaufnahmevorrichtung nach Anspruch 9, **dadurch gekennzeichnet, dass** die Greifmittel (26) des Beobachtungsblocks (B2) zwei Griffe (27) umfassen, die sich jeweils entlang der zwei Seitenränder dieses Beobachtungsblocks erstrecken.

11. Bildaufnahmevorrichtung nach einem der Ansprüche 1 bis 10, **dadurch gekennzeichnet, dass** der Beobachtungsblock (B2) einen Unterbau (C2) umfasst, der das Ablegen der Anordnung auf einer horizontalen Fläche (H) mittels des Beobachtungsblocks (B2) gestattet.

12. Bildaufnahmevorrichtung nach Anspruch 1, **dadurch gekennzeichnet, dass** die Bildaufnahmeachse (A1) des Bildaufnahmeblocks (B1) einen spitzen Winkel (P, P") mit der Horizontalen einnimmt, wenn die Anordnung mittels des Beobachtungsblocks auf einer horizontalen Fläche aufliegt.

13. Bildaufnahmevorrichtung nach den Ansprüchen 9 und 11, gemeinsam genommen, **dadurch gekennzeichnet, dass** der Unterbau (C2) des Beobachtungsblocks (B2) durch eine untere Oberfläche (29) der zwei Griffe (27), die der Beobachtungsblock (B2) aufweist, gebildet ist.

14. Bildaufnahmevorrichtung nach Anspruch 13, **dadurch gekennzeichnet, dass** die untere Oberfläche (29) der Griffe (27) des Beobachtungsblocks (B2) im wesentlichen plan ist und einen spitzen Winkel (P') mit einer Auflagefläche (D), welche dieser Beobachtungsblock (B2) darüberhinaus für den Bildaufnahmeblock (B1) aufweist, bildet.

15. Bildaufnahmevorrichtung nach einem der Ansprüche 1 bis 14, **dadurch gekennzeichnet, dass** der Bildaufnahmeblock (B1) einen Unterbau (C1) aufweist, der das Ablegen der Anordnung auf eine horizontale Fläche mittels dieses Bildaufnahmeblocks (B1) gestattet.

16. Bildaufnahmevorrichtung nach Anspruch 15, **dadurch gekennzeichnet, dass** die Bildaufnahmeachse (A1) des Bildaufnahmeblocks (B1) mit der Horizontalen einen spitzen Winkel (P) einnimmt, wenn die Anordnung mittels dieses Bildaufnahmeblocks auf einer horizontalen Ebene (H) aufliegt.

17. Bildaufnahmevorrichtung nach einem der Ansprüche 1 bis 16, **dadurch gekennzeichnet, dass** die Amplitude des Winkelausschlags zwischen dem Bildaufnahmeblock (B1) und dem Beobachtungsblock (B2) ausreicht, um es dem Beobachtungsblock (B2) zu gestatten, eine um- oder zurückgedrehte Position einzunehmen, in der der Sucherbildschirm (12), den er umfasst, von vorne sichtbar ist.

18. Bildaufnahmevorrichtung nach den zusammen genommenen Ansprüchen 16 und 17, **dadurch gekennzeichnet, dass**, wenn die Anordnung mittels des Bildaufnahmeblocks (B1) auf einer horizontalen Fläche ruht und der Beobachtungsblock (B2) in einer zurückgedrehten Position ist, sich der Sucherbildschirm dieses Beobachtungsblocks (B2) im wesentlichen vertikal erstreckt.

19. Bildaufnahmevorrichtung nach einem der Ansprüche 17, 18, **dadurch gekennzeichnet, dass** sie eine Erfassungseinrichtung (39) umfasst, welche sensibel ist für die Position des Beobachtungsblocks (B2), und welches Inversionsmittel ansteuert, die geeignet sind, eine Inversion des auf dem Sucherbildschirm dargestellten Bildes zu gestatten, wenn der Beobachtungsblock (B2) sich in zurückgedrehter Position befindet.

20. Bildaufnahmevorrichtung nach Anspruch 19, **dadurch gekennzeichnet, dass** der Sucherbildschirm (12) zwei überlagerte Anzeigeschichten umfasst, eine zur Anzeige des Bildes des betroffenen Subjekts, die andere zur Anzeige wenigstens eines, irgendeines anderen Bildes, wobei die Inversionsmittel (29) geeignet sind, eine Inversion des Bildes des Subjekts bezüglich einer horizontalen Symmetrieachse, und jene des anderen Bildes bezüglich einer horizontalen Symmetrieachse und bezüglich einer vertikalen Symmetrieachse zu ermöglichen.

21. Bildaufnahmevorrichtung nach einem der Ansprüche 1 bis 20, **dadurch gekennzeichnet, dass** sie tragbar ist.
